# EUROPÄISCHE PATENTSCHRIFT

(11) **EP 4 106 992 B1**
(45) Veröffentlichungstag und Bekanntmachung des Hinweises auf die Patenterteilung: **15.11.2023**
(21) Anmeldenummer: 21703930.4
(22) Anmeldetag: 09.02.2021
(51) Int. Cl.: B32B 17/10

(54) **VERBUNDSCHEIBE MIT MEHREREN FUNKTIONSELEMENTEN UND SAMMELSCHIENE AUF SPERRFOLIE**
LAMINATED PANEL WITH MULTIPLE FUNCTIONAL ELEMENTS AND BUSBAR ON BARRIER FILM
VITRE COMPOSITE POURVUE D'UNE PLURALITÉ D'ÉLÉMENTS FONCTIONNELS ET BARRE OMNIBUS SUR UNE FEUILLE BARRIÈRE

(30) Priorität: 19.02.2020 EP 20158129
(43) Veröffentlichungstag der Anmeldung: 28.12.2022
(73) Patentinhaber: Saint-Gobain Glass France, 92400 Courbevoie (FR)
(72) Erfinder: KLEIN, Marcel, 52499 Baesweiler (DE)
(74) Vertreter: Hermanns, Ellen
(86) Internationale Anmeldenummer: PCT/EP2021/053045
(87) Internationale Veröffentlichungsnummer: WO 2021/165093

(56) Entgegenhaltungen:
- WO-A1-2018/188844
- DE-U1-202019 100 577
- US-A1- 2016 282 645

## Beschreibung

Die Erfindung betrifft eine Verbundscheibe mit Funktionselementen mit elektrisch steuerbaren optischen Eigenschaften, ein Verfahren zur Herstellung der Verbundscheibe sowie die Verwendung der Verbundscheibe.

Verbundscheiben mit elektrisch steuerbaren Funktionselementen sind als solche bekannt. Die optischen Eigenschaften der Funktionselemente können durch eine angelegte elektrische Spannung verändert werden.

Ein Beispiel für solche Funktionselemente sind SPD-Funktionselemente (SPD = suspended particle device), die beispielsweise aus EP 0876608 B1 und WO 2011033313 A1 bekannt sind. Durch die angelegte Spannung lässt sich die Transmission von sichtbarem Licht durch SPD-Funktionselemente steuern.

Ein weiteres Beispiel sind PDLC-Funktionselemente (PDLC = polymer dispersed liquid crystal), die beispielsweise aus DE 102008026339 A1 bekannt sind. Die aktive Schicht enthält dabei Flüssigkristalle, welche in einer Polymermatrix eingelagert sind. Wird keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht.

Ein weiteres Beispiel sind PNLC-Funktionselemente (PNLC = polymer network liquid crystal). Die aktive Schicht enthält dabei Flüssigkristalle, welche in ein Polymernetzwerk eingelagert sind, wobei die Funktionsweise ansonsten analog wie bei den PDLC-Funktionselementen ist.

SPD-, PDLC und PNLC-Funktionselemente sind als Funktionselement kommerziell erhältlich, wobei die aktive Schicht und die zum Anlegen einer Spannung erforderlichen Flächenelektroden zwischen zwei Trägerfolien angeordnet sind. Bei der Herstellung der Verbundscheibe wird das Funktionselement in der gewünschten Größe und Form aus einem Funktionselement ausgeschnitten und zwischen die Folien einer Zwischenschicht eingelegt, mittels derer zwei Glasscheiben miteinander zur Verbundscheibe laminiert werden. Die Seitenkante des Funktionselements ist dabei offen, so dass die aktive Schicht über die Seitenkante Kontakt zu anderem Material der Verbundscheibe hat, z.B. aus der Zwischenschicht, was zu funktionellen oder optischen Störungen führen kann (Randausbleichung).

Funktionselemente werden normalerweise in EVA laminiert, da die Randausbleichung akzeptabel gering ist. Für den Automobilbereich, insbesondere, wenn zusätzliche Funktionen (dunkel getönt oder akustisch) gewünscht werden, ist aber der Einsatz von PVB-Folien Standard. Bei PVB entwickelt sich die Randausbleichung schneller und hört selbst nach einem Monat Alterung nicht auf.

Das eingesetzte Polyvinylbutyral (PVB) enthält Weichmacher. Der Weichmacher oder andere chemische Bestandteile der Zwischenschicht können über die offene Kante des Funktionselements in die aktive Schicht eindiffundieren, was zur Korrosion oder Degradation der aktiven Schicht führen kann. Dies äußert sich insbesondere als Ent- oder Verfärbung der aktiven Schicht im Randbereich, was die Funktion und das optische Erscheinungsbild des Funktionselements negativ beeinflussen kann und zu einer sichtbaren Alterung führt.

Um eine Kantenversiegelung zu realisieren, die die Ränder des Funktionselements schließt, kann eine PET-Abdeckung um den PDLC-Rand herum helfen. Die Anbringung ist aber zeitaufwändig und umfasst viele Arbeitsschritte.

Um dieses Problem zu vermeiden, werden z.B. in WO 2019/238521 A1, WO 2019/238520 A1 und WO 2019/166155 A1 während der Laminierung Sperrfolien wie PET-Streifen auf beiden Seiten des PDLC-Randes angebracht, damit kein Weichmacher den PDLC beschädigt. In der DE 20 2019 100 577 U1 ist eine Verbundscheibe mit einem Funktionselement mit einer Randversiegelung offenbart.

In der WO 2018/188844 A1 ist eine Verbundscheibe mit einem zwischen einer ersten Zwischenschicht und einer zweiten Zwischenschicht angeordneten Funktionselement mit elektrisch steuerbaren optischen Eigenschaften offenbart, wobei zwischen dem Funktionselement und der ersten Zwischenschicht sowie zwischen dem Funktionselement und der zweiten Zwischenschicht mindestens eine Sperrfolie angeordnet ist, die zumindest abschnittsweise einen Überstand über das Funktionselement aufweist.

In jüngerer Zeit erhöht sich die Nachfrage nach Verbundscheiben, die nicht nur ein Funktionselement, sondern mehrere gesonderte Funktionselemente aufweisen. Hier ergibt sich das zusätzliche Problem, dass zur gesonderten Ansteuerung der Funktionselemente mehrere separate Sammelschienen erforderlich sind, die in der Regel während des Stapelaufbaus für die Verbundscheibe auf die Folien für die Zwischenschichten aufgelötet werden müssen. Dies kann Staub auf dem Folienstapel erzeugen, insbesondere in der Nähe des Funktionselements.

Außerdem dauert das Auflöten dieser Sammelschienen während der Laminierung des Folienstapels lange.

Der vorliegenden Erfindung liegt die Aufgabe zugrunde, eine Verbundscheibe mit mindestens zwei gesonderten Funktionselementen mit elektrisch steuerbaren optischen Eigenschaften bereitzustellen, die die vorstehend beschriebenen Nachteile aus dem Stand der Technik überwindet. Insbesondere besteht die Aufgabe der Erfindung darin, eine Verbundscheibe mit mindestens zwei gesonderten Funktionselementen mit elektrisch steuerbaren optischen Eigenschaften bereitzustellen, bei der zusätzliche zeitaufwändige Arbeitsschritte während der Stapelbindung zum Aufbringen von Sammelschienen und der damit verbundenen Staubbildung vermieden werden.

Der Erfinder hat festgestellt, dass diese Aufgabe durch Kombination der Versiegelung der Seiten der Funktionselemente mit der Gestaltung der Sammelschienen-Anordnung gelöst werden kann. Das bedeutet, dass eine PET-Folie sowohl als Trägerfolie für Sammelschienen als auch als Schutzfolie der Funktionselement-Kanten verwendet wird.

Die Aufgabe der vorliegenden Erfindung wird daher durch eine Verbundscheibe mit elektrisch steuerbaren optischen Eigenschaften gemäß dem unabhängigen Anspruch 1 gelöst. Die Erfindung betrifft auch ein Verfahren zur Herstellung der Verbundscheibe mit den eingebauten Funktionselementen sowie die Verwendung der Verbundscheibe gemäß den weiteren unabhängigen Ansprüchen. Bevorzugte Ausführungen gehen aus den Unteransprüchen hervor.

Bei dem erfindungsgemäßen Verfahren werden PET-Sperrfolien vor der Bildung der Stapelanordnung für die Laminierung zur Bildung der Verbundscheibe durch Zuschnitt in die richtige Größe und Anordnen an der richtigen Position in der Folienanordnung für die Kantenversiegelung vorbereitet wie heute üblich. Es wird aber zusätzlich bereits vorher mindestens eine Sammelschiene auf eine PET-Sperrfolie aufgebracht. Dadurch ist während der Bildung der Anordnung nur noch ein Verbinden dieser Sammelschiene(n) auf der PET-Sperrfolie mit den Sammelschienen der Funktionselemente erforderlich.

Der Vorteil ist, dass während des Aufbaus der Anordnung zur Laminierung weniger gelötet werden muss, da die erforderlichen zusätzlichen Sammelschienen bereits aufgebracht sind und nicht zeitaufwendig im Verlauf der Bildung der Anordnung auf die Folie für die Zwischenschicht aufgebracht werden müssen. Dies spart Zeit und verringert die Staubbildung.

Ein weiterer Vorteil ist, dass die Sammelschienen auf PET-Folien auch aufgedruckt werden können. Die Aufbringung der Sammelschienen auf PVB-Folien gemäß dem Stand der Technik durch Drucken ist dagegen schwierig.

Die Erfindung wird im Folgenden näher erläutert. Die folgenden Angaben werden bezüglich der erfindungsgemäßen Verbundscheibe oder des Verfahrens zur Herstellung der Verbundscheibe gemacht, beziehen sich soweit anwendbar aber immer sowohl auf die Verbundscheibe selbst als auch auf das Verfahren, sofern nicht ausdrücklich anders angegeben.

Gemäß der Erfindung wird eine Verbundscheibe bereitgestellt, die eine Außenscheibe, eine Innenscheibe und mindestens zwei Zwischenschichten zwischen der Außenscheibe und der Innenscheibe umfasst,
wobei mindestens zwei gesonderte Funktionselemente mit elektrisch steuerbaren optischen Eigenschaften in einer Ebene zwischen den beiden Zwischenschichten angeordnet sind,
die Funktionselemente jeweils in dieser Reihenfolge eine erste Trägerfolie, eine erste Flächenelektrode, eine aktive Schicht, eine zweite Flächenelektrode und eine zweite Trägerfolie umfassen,
an zwei gegenüberliegenden Seiten jedes Funktionselements jeweils eine innere Sammelschiene mit der ersten Flächenelektrode oder der zweiten Flächenelektrode des jeweiligen Funktionselements verbunden ist,
mindestens eine der beiden gegenüberliegenden Seiten jedes Funktionselements zumindest entlang eines Teilbereichs durch zwei Polyethylenterephthalat (PET)-Sperrfolien versiegelt ist, wobei die eine PET-Sperrfolie zum Teil zwischen der einen Zwischenschicht und einem Randbereich der ersten Trägerfolie angeordnet ist und die andere PET-Sperrfolie zum Teil zwischen der anderen Zwischenschicht und einem Randbereich der zweiten Trägerfolie angeordnet ist,
wobei
auf einer der PET-Sperrfolien mindestens eine äußere Sammelschiene angebracht ist, die über eine elektrisch leitende Verbindung mit der inneren Sammelschiene eines Funktionselements verbunden ist, um das Funktionselement gesondert von dem oder den anderen Funktionselementen elektrisch anzusteuern.

In der erfindungsgemäßen Verbundscheibe sind mindestens zwei gesonderte Funktionselemente mit elektrisch steuerbaren optischen Eigenschaften zwischen in den Zwischenschichten eingelagert. Die Anzahl N der gesonderten Funktionselemente in einer Ebene zwischen den Zwischenschichten kann z.B. im Bereich von 2 bis 50, bevorzugt 2 bis 30, liegen.

Die mindestens zwei gesonderten Funktionselemente sind in einer Ebene der Verbundscheibe angeordnet. Sie sind vorteilhafterweise in einer Reihe angeordnet, wobei jeweils eine Seite der Funktionselemente fluchtend zueinander in einer Linie angeordnet sind und die dazu gegenüberliegende Seite der Funktionselemente fluchtend in einer Linie zueinander angeordnet sind.

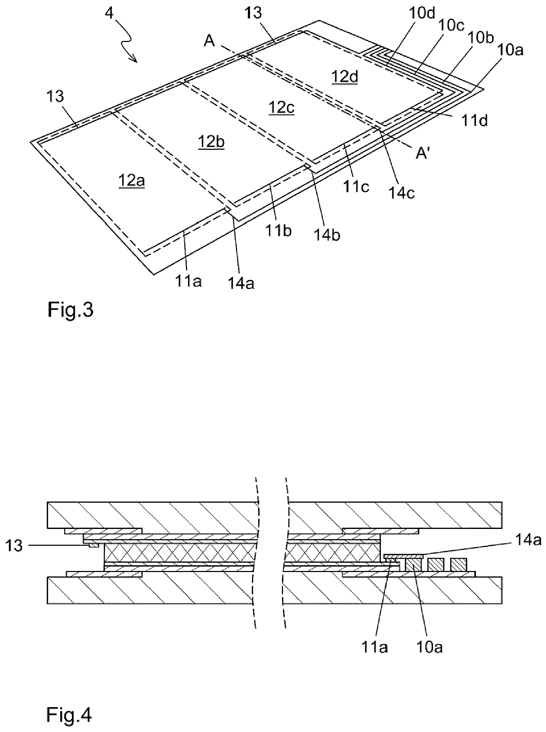

Bei den Seiten und den gegenüberliegenden Seiten, die fluchtend angeordnet sind, handelt es sich insbesondere um die zwei gegenüberliegenden Seiten jedes Funktionselements, die jeweils mit einer Flächenelektrode an eine innere Sammelschiene verbunden sind. In Fig. 3 ist z.B. eine fluchtende Anordnung der gegenüberliegenden Seiten gezeigt. Es ist gegebenenfalls denkbar, dass die Funktionselemente in mehr als einer solchen Reihe angeordnet sind.

Bei den mindestens zwei Funktionselementen mit elektrisch steuerbaren optischen Eigenschaften handelt es sich jeweils um Funktionselemente, die in dieser Reihenfolge eine erste Trägerfolie, eine erste Flächenelektrode, eine aktive Schicht, eine zweite Flächenelektrode und eine zweite Trägerfolie umfassen.

Aktive Schichten für die Funktionselemente sind dem Fachmann bekannt. Die aktive Schicht weist veränderliche optische Eigenschaften auf, die durch eine an die aktive Schicht angelegte elektrische Spannung gesteuert werden können. Unter elektrisch steuerbaren optischen Eigenschaften werden im Sinne der Erfindung insbesondere solche Eigenschaften verstanden, die stufenlos steuerbar sind, aber gleichermaßen auch solche, die zwischen zwei oder mehr diskreten Zuständen geschaltet werden können. Die besagten optischen Eigenschaften betreffen insbesondere die Lichttransmission und/oder das Streuverhalten.

Die Funktionsfolie umfasst Flächenelektroden zum Anlegen der Spannung an die aktive Schicht, die zwischen den Trägerfolien und der aktiven Schicht angeordnet sind. Eine Flächenelektrode ist zwischen der aktiven Schicht und der ersten Trägerfolie angeordnet und eine Flächenelektrode ist zwischen der aktiven Schicht und der zweiten Trägerfolie angeordnet. Die Flächenelektroden können bzgl. Zusammensetzung und/oder Dicke gleich oder verschieden sein. Die Flächenelektroden sind meist gleich.

Die Flächenelektroden sind bevorzugt als transparente, elektrisch leitfähige Schichten ausgestaltet. Die Flächenelektroden enthalten bevorzugt zumindest ein Metall, eine Metalllegierung oder ein transparentes leitfähiges Oxid (transparent conducting oxide, TCO). Beispiele für transparente, leitende Oxide (TCO) sind mit Zinn dotiertes Indiumoxid (ITO, auch als Indium-Zinn-Oxid bezeichnet), mit Antimon oder Fluor dotiertes Zinnoxid (SnO₂:F), mit Gallium dotiertes Zinkoxid oder mit Aluminium dotiertes Zinkoxid (ZnO: AI), wobei ITO bevorzugt ist. Die Dicke der elektrisch leitenden Schichten auf Basis dieser transparenten leitenden Oxide (TCO) liegt bevorzugt im Bereich von 10 nm bis 2 Mikrometer (µm), bevorzugter 30 nm bis 500 nm und insbesondere 50 bis 100 nm.

Die elektrisch leitfähige Schicht kann auch eine Metallschicht sein, vorzugsweise eine Dünnschicht oder ein Stapel von Dünnschichten, die Metallschichten umfassen. Metall umfasst hier auch Metalllegierungen. Geeignete Metalle sind z.B. Ag, Al, Pd, Cu, Pd, Pt, In, Mo, Au, Ni, Cr, W oder Legierungen davon. Diese Metallbeschichtungen werden als TCC (transparent conductive coating) bezeichnet. Typische Dicken der Einzelschichten liegen im Bereich von 2 bis 50 nm.

Typischerweise sind die Flächenelektroden in Form einer elektrisch leitfähigen Beschichtung auf der Trägerfolie ausgebildet. Die Seite der Trägerfolie mit der die Flächenelektrode bildenden elektrisch leitfähigen Beschichtung ist dann der aktiven Schicht zugewandt.

Die Funktionselemente umfassen ferner eine erste Trägerfolie und eine zweite Trägerfolie. Bei der ersten und zweiten Trägerfolie handelt es sich insbesondere um polymere oder thermoplastische Folien. Die erste und zweite Trägerfolie können bzgl. Zusammensetzung und/oder Dicke gleich oder verschieden sein. Typischerweise bestehen die beiden Trägerfolien aus derselben Zusammensetzung. Die folgenden Angaben zu Trägerfolien beziehen sich auf sowohl auf die erste Trägerfolie als auch auf die zweite Trägerfolie.

Die Trägerfolien enthalten insbesondere ein thermoplastisches Material oder bestehen daraus. Das thermoplastische Material kann ein thermoplastisches Polymer oder eine Mischung von zwei oder mehr thermoplastischen Polymeren sein. Neben dem thermoplastischen Material kann die Trägerfolie ferner Zusätze enthalten, wie z.B. Weichmacher. Das thermoplastische Material der Trägerfolien ist bevorzugt Polyethylenterephthalat (PET), wie es bei kommerziell erhältlichen Funktionselementen üblich ist.

Das thermoplastische Material der Trägerfolie kann auch Mischungen von PET mit anderen thermoplastischen Polymeren und/oder Copolymere von PET enthalten oder daraus bestehen. Das thermoplastische Material der Trägerfolie kann z.B. auch PU, Polypropylen, Polycarbonat, Polymethylmethacrylat, Polyacrylat, Polyvinylchlorid, Polyacetatharz, fluorinierte Ethylen-Propylene, Polyvinylfluorid und/oder Ethylen-Tetrafluorethylen enthalten oder daraus bestehen.

Die Dicke jeder Trägerfolie liegt bevorzugt im Bereich von 0,03 mm bis 0,4 mm, bevorzugter von 0,04 mm bis 0,2 mm.

In einer bevorzugten Ausgestaltung sind die Funktionselemente jeweils unabhängig ausgewählt aus einem PDLC-Funktionselement, einem PNLC-Funktionselement oder einem SPD-Funktionselement, wobei die Funktionselemente besonders bevorzugt PDLC-Funktionselemente sind. Die Funktionsweise von Funktionselementen sind dem Fachmann an sich bekannt.

Die aktive Schicht eines PDLC-Funktionselements enthält Flüssigkristalle, welche in eine Polymermatrix eingelagert sind. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht.

Die aktive Schicht eines PNLC-Funktionselements enthält Flüssigkristalle, welche in ein Polymernetzwerk eingelagert sind. Ansonsten ist das Funktionsprinzip ähnlich wie bei dem PDLC-Funktionselement.

Die aktive Schicht eines SPD-Funktionselements enthält suspendierte Partikel, wobei die Absorption von Licht durch die aktive Schicht mittels Anlegen einer Spannung an die Flächenelektroden veränderbar ist.

Das Funktionselement kann als Rollenware vorliegen. Aus der Rollenware können dann Stücke passender Größe ausgeschnitten werden. Die Fläche des passend geschnittenen erfindungsgemäßen Funktionselements kann breit variieren und so den Erfordernissen im Einzelfall angepasst werden. Die Dicke des Funktionselements kann z.B. im Bereich von 0,09 mm bis 0,8 mm, z.B. 0,11 bis 0,41 mm, liegen.

An zwei gegenüberliegenden Seiten jedes Funktionselements sind jeweils eine innere Sammelschiene mit der ersten Flächenelektrode oder der zweiten Flächenelektrode des jeweiligen Funktionselements verbunden.

Bei den inneren und den nachstehend beschriebenen äußeren Sammelschienen handelt es sich um die üblichen Sammelschienen, die beim Einbau eines Funktionselements in Verbundscheiben für den Kontakt zur elektrischen Stromversorgung und die Verteilung des elektrischen Stroms zum Funktionselement eingesetzt werden. Sammelschienen werden auch als Sammelleiter oder busbar bezeichnet und sind dem Fachmann bekannt.

Die inneren Sammelschienen werden an die Flächenelektroden angebunden, indem entlang eines Randbereichs der jeweiligen Seite des Funktionselements eine Trägerfolie, eine Flächenelektrode und die aktive Schicht ausgespart sind, so dass die die andere Flächenelektrode mit der dazugehörigen Trägerfolie übersteht. Auf der überstehenden Flächenelektrode wird die innere Sammelschiene angeordnet. Auf der gegenüberliegenden Seite des jeweiligen Funktionselements ist eine weitere innere Sammelschiene in entsprechender Weise an die andere Flächenelektrode angebunden.

Eine Sammelschiene ist elektrisch leitend. Sie kann z.B. durch ein elektrisch leitendes Metallband oder eine elektrisch leitende Beschichtung, z.B. ein Silber enthaltender Druck, gebildet sein. Metall schließt hier Metalllegierungen ein. Ein Band aus Kupfer oder einer Kupferlegierung ist z.B. geeignet. Die als Metallband ausgebildete Sammelschiene wird gewöhnlich über eine elektrisch leitfähige Zwischenschicht, z.B. eine Silberschicht, mit der Flächenelektrode verbunden.

Die Verbundscheibe umfasst eine Innenscheibe und eine Außenscheibe. Die Innenscheibe und die Außenscheibe können flache oder gebogene Scheiben sein. Die Scheiben können aus anorganischem Glas und/oder organischem Glas (Kunststoff) sein. Die Innenscheibe und die Außenscheibe können z.B. unabhängig voneinander aus Flachglas, Quarzglas, Borosilikatglas, Kalk-Natron-Glas, Aluminosilikatglas, Polycarbonat und/oder Polymethacrylat sein. Die Innenscheibe und die Außenscheibe sind bevorzugt aus Kalk-Natron-Glas. Die Innenscheibe und die Außenscheibe weisen z.B. unabhängig voneinander eine Dicke im Bereich von 0,4 bis 5,0 mm, z.B. 1 bis 3 mm, bevorzugter 1,6 bis 2,5 mm, auf.

Die Innenscheibe und/oder die Außenscheibe können weitere geeignete, an sich bekannte Beschichtungen aufweisen, z.B. Antihaftbeschichtungen, getönte Beschichtungen, Antireflexbeschichtungen, Antikratzbeschichtungen oder Low-E-Beschichtungen. Ein Beispiel für beschichtetes Glas ist Low-E-Glas (Low-Emissivity-Glas).

Die mindestens zwei Zwischenschichten werden insbesondere aus polymeren Folien, in der Regel thermoplastischen Folien gebildet. Die Zwischenschichten können bzgl. Zusammensetzung und/oder Dicke gleich oder verschieden sein. Die Zwischenschichten können durch handelsübliche Laminierfolien gebildet werden. Sie dienen zur Verklebung bzw. Laminierung der Komponenten der Verbundscheibe.

Die Zwischenschicht kann z.B. Polyvinylbutyral (PVB), Ethylenvinylacetat, Polyurethan, Polypropylen, Polyacrylat, Polyethylen, Polycarbonat, Polymethylmetacrylat, Polyvinylchlorid, Polyacetatharz, Gießharz, Acrylat, fluoriniertes Ethylen-Propylen, Polyvinylfluorid und/oder Ethylen-Tetrafluorethylen und/oder ein Gemisch und/oder ein Copolymer davon enthalten.

In einer bevorzugten Ausführungsform sind die mindestens zwei Zwischenschichten jeweils unabhängig gebildet aus einer Polyvinylbutyral (PVB)-Folie, einer Ethylenvinylacetat (EVA)-Folie oder einer thermoplastischen Polyurethan (TPU)-Folie. In einer bevorzugten Ausführungsform sind die mindestens zwei Zwischenschichten aus PVB-Folien gebildet. Die für die Bildung der Zwischenschichten eingesetzten Folien, insbesondere die PVB-Folien, können einen Weichmacher enthalten.

Die mindestens zwei Folien für die Bildung der Zwischenschichten weisen bevorzugt jeweils unabhängig eine Dicke im Bereich von 0,03 mm bis 0,9 mm, besonders bevorzugt 0,3 mm bis 0,6 mm, auf, wobei es sich bevorzugt um PVB-Folien handelt.

Bei der erfindungsgemäßen Verbundscheibe ist eine der beiden gegenüberliegenden Seiten jedes Funktionselements zumindest entlang eines Teilbereichs durch zwei Polyethylenterephthalat (PET)-Sperrfolien versiegelt. Die eine PET-Sperrfolie ist dabei zum Teil zwischen der einen Zwischenschicht und einem Randbereich der ersten Trägerfolie angeordnet und die andere PET-Sperrfolie ist zum Teil zwischen der anderen Zwischenschicht und einem Randbereich der zweiten Trägerfolie angeordnet. Es versteht sich, dass sich die gegenüberliegenden Seiten hier auf die Seiten der Funktionselemente beziehen, die mit den inneren Sammelschienen verbunden sind.

Bei den PET-Sperrfolien handelt es sich um PET-Folien, wie sie bereits vorstehend beschrieben sind. Die PET-Folien sind gängige, im Handel erhältliche Folien. Die PET-Sperrfolien weisen z.B. jeweils unabhängig eine Dicke im Bereich 0,02 mm bis 0,2 mm auf, bevorzugter von 0,04 mm bis 0,15 mm.

Die Versiegelung einer Seite eines Funktionselements bedeutet dabei, dass die Seitenkante des Funktionselements, insbesondere die offene Seite der aktiven Schicht, von der PET-Folie abgedeckt wird, wodurch die aktive Schicht des Funktionselements vor den Materialien der Zwischenschicht, wie einer PVB-Zwischenschicht, z.B. darin enthaltene Weichmacher, geschützt wird, auch während des Laminierprozesses (hohe Temperatur und Druck). Die Seiten sind zumindest entlang eines Teilbereichs versiegelt, d.h. sie können teilweise oder über die gesamte Länge versiegelt sein. In der Regel ist die Seite über die ganze Länge versiegelt, wobei die Versiegelung gegebenenfalls unterbrochen sein kein, z.B. für Anschlüsse oder elektrische Leitungen.

Die PET-Sperrfolien für die Randversiegelung der Funktionselemente können während des Aufbaus der Anordnung direkt und in einfacher Weise an dem Funktionselement fixiert werden, indem man die Folie für die Zwischenschicht in einem Randbereich des Funktionselements von der Trägerfolie ablöst und zurückfaltet und nach Einlegen eines Teils der PET-Sperrfolie die zurückgefaltete Folie wieder auf den eingelegten Teil der PET-Sperrfolie auflegt. Man kann die PET-Sperrfolie natürlich auch vor der Aufbringung der Folie für die Zwischenschicht auf der entsprechenden Teilanordnung an die richtige Stelle positionieren. Auf diese Weise ist in der vollständigen Anordnung ein Teil der jeweiligen PET-Sperrfolie zwischen der Folie der Zwischenschicht und einer Trägerfolie positioniert, während der andere Teil über dem Funktionselement herausragt.

Für die Anbringung der PET-Sperrfolien bzw. für die später erfolgende Versiegelung in der Verbundscheibe sind keine Klebstoffe oder Klebstoffschichten zur Fixierung erforderlich. Es ist aber auch möglich, zur Fixierung der PET-Sperrfolien Klebstoffe oder Klebstoffschichten einzusetzen, z.B. für die PET-Trägerfolie, auf der mindestens eine äußere Sammelschiene angebracht ist. Da die äußere Sammelschiene beim Aufbau mittels einer Verbindung mit der inneren Sammelschiene verbunden wird, kann dies zur Fixierung ausreichen.

An einer oder beiden gegenüberliegenden Seiten jedes Funktionselements, die mit inneren Sammelschienen verbunden sind, sind auf diese Weise zwei PET-Sperrfolien auf der oberen und unteren Seite der Funktionselemente entlang eines Randbereichs fixiert.

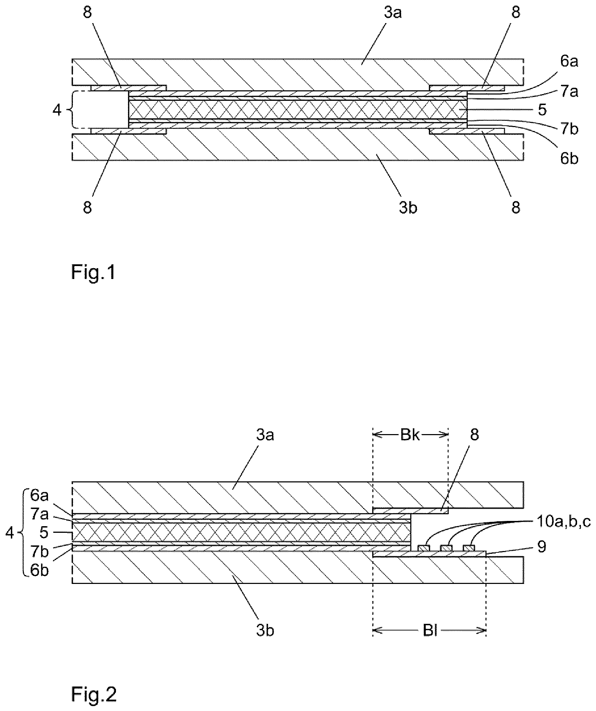

Die Länge der PET-Sperrfolie stellt die Dimension entlang der Seite der Funktionselemente dar, an der die PET-Sperrfolie angebracht ist. Die Breite der PET-Sperrfolie ist entsprechend quer zur Länge bzw. quer zu der Seite der PET-Sperrfolie. Die Breite der PET-Sperrfolie ist in Fig. 2 mit Bk bzw. BI gekennzeichnet.

Die Länge der PET-Sperrfolie kann variieren. Es können z.B. für jede Seite eines Funktionselements jeweils zwei PET-Sperrfolien eingesetzt werden. Alternativ ist es möglich zwei PET-Sperrfolien gemeinsam für die Seiten aller Funktionselemente, die in einer Flucht liegen, zu verwenden. Letzteres ist in der Regel aus Praxisgründen bevorzugt. Die PET-Sperrfolie kann gegebenenfalls an einer oder mehreren Stellen Aussparungen aufweisen, z.B. für elektrische Leitungen oder Anschlüsse.

Wie nachstehend ausführlicher erläutert, faltet sich der herausragende Teil der PET-Sperrfolie während der Laminierung, was zur Abdeckung der aktiven Schicht bzw. Versiegelung der Seite der Funktionselemente führt.

Die Breite der PET-Sperrfolie soll zum einen eine ausreichende Fixierung der PET-Sperrfolie zwischen Trägerfolie und Folie für die Zwischenschicht und zum anderen die Versiegelung mithilfe des herausragenden Teils ermöglichen. Die Breite des Teils der PET-Sperrfolie, der aus der Funktionselement herausragt, sollte ausreichen, um die Seitenkante des Funktionselements abdecken zu können.

Sofern zwei PET-Sperrfolien an einem Randbereich bzw. einer Seite des Funktionselements angeordnet sind, gilt dies für die Summe der Breiten der Teile der beiden PET-Sperrfolien, die aus der Funktionselement herausragen. Für eine sichere Abdeckung ist ein Spielraum bei der Breite zu berücksichtigen, da die PET-Sperrfolien sich bei der Laminierung nicht unbedingt glatt an die Seitenkante anschmiegen, sondern sich Faltungen ergeben können.

Die PET-Sperrfolien, auf denen mindestens eine äußere Sammelschiene aufgebracht ist, brauchen zudem für die aufgebrachten Sammelschienen mehr Platz, der natürlich auch von der Zahl der darauf befindlichen äußeren Sammelschienen abhängt. In diesem Fall kann es auch zweckmäßig sein, dass die PET-Sperrfolie ohne äußere Sammelschienen, die auf derselben Seite des Funktionselements gegenüber der PET-Sperrfolie mit mindestens einer äußeren Sammelschiene angeordnet ist, eine genügende Breite des herausragenden Teils aufweist, um die Seite des Funktionselements allein zu versiegeln.

In einer bevorzugten Ausführungsform liegt die Breite Bk der PET-Sperrfolie, auf der keine äußere Sammelschiene ist, im Bereich von 5 bis 50 mm, bevorzugt 10 bis 25 mm. In einer bevorzugten Ausführungsform liegt die Breite BI der PET-Sperrfolie, auf der mindestens eine äußere Sammelschiene angebracht ist, im Bereich von 20 bis 125 mm, bevorzugt 30 bis 100 mm. Es versteht sich, dass die Breite der PET-Sperrfolie mit mindestens einer äußeren Sammelschiene stark von der Anzahl der darauf befindlichen äußeren Sammelschienen abhängt.

Auf einer der beiden PET-Sperrfolien, die auf einer Seite der Funktionselemente angebracht ist, an der eine innere Sammelschiene angeordnet ist, ist mindestens eine äußere Sammelschiene angebracht, die über eine elektrisch leitende Verbindung mit der inneren Sammelschiene eines Funktionselements verbunden ist, um das Funktionselement gesondert von dem oder den anderen Funktionselementen elektrisch anzusteuern.

In einer Ausführungsform befinden sich zwei oder mehr äußere Sammelschienen auf der PET-Sperrfolie, wobei jede äußere Sammelschiene über eine elektrisch leitende Verbindung mit der inneren Sammelschiene eines jeweils anderen Funktionselements verbunden ist.

Die äußeren Sammelschienen auf der PET-Sperrfolie laufen, sofern zwei oder mehr äußere Sammelschienen aufgebracht sind, parallel zueinander und sind voneinander beabstandet, um einen elektrischen Kontakt zu vermeiden. Die äußeren Sammelschienen werden auf diese Weise zu einem Anschluss geführt, wo jede äußere Sammelschiene und damit jedes Funktionselement gesondert an eine Stromversorgung angeschlossen werden kann.

Jede äußere Sammelschiene wird dabei mit der inneren Sammelschiene eines Funktionselements über eine elektrisch leitende Verbindung verbunden. Die Verbindung kann dabei ebenfalls eine Sammelschiene oder eine Lötverbindung sein. Die Verbindungsstellen der Verbindung mit der inneren und äußeren Sammelschiene sind dabei vorteilhafterweise ein Bereich an einem Ende der inneren Sammelschiene (insbesondere das Ende, das zum Anschluss für die Sammelschienen gerichtet ist) und ein Bereich an einem Ende der äußeren Sammelschiene (insbesondere das Ende, das vom Anschluss für die Sammelschienen weg gerichtet ist). Auf diese Weise wird letztlich eine Sammelschiene mit einem Knick gebildet, die es ermöglicht, dass die innere Sammelschiene eines jedes Funktionselements über die äußere Sammelschiene gesondert zu einem Anschluss geführt werden kann.

Auf der Seite, auf der sich die Trägerfolie mit den äußeren Sammelschienen befindet, kann die innere Sammelschiene einer Funktionsfolie direkt zu dem Anschluss für die Sammelschienen geführt werden. Es ist daher bevorzugt, dass bei einer Anzahl der gesonderten Funktionselemente in der Verbundscheibe von N die Anzahl der äußeren Sammelschienen auf der PET-Sperrfolie (N-1) ist. Wenn beispielsweise 4 gesonderte Funktionselemente in der Verbundscheibe vorhanden sind, beträgt die Anzahl der äußeren Sammelschienen auf der PET-Sperrfolie bevorzugt 3.

Während auf einer Seite des Funktionselements, die inneren Sammelschienen über die äußeren Sammelschienen auf der PET-Folie gesondert zum Anschluss geführt werden, werden die inneren Sammelschienen auf der Seite der Funktionselemente, die der Seite gegenüberliegt, auf der die mindestens eine äußere Sammelschiene auf der PET-Sperrfolie angebracht ist, in der Regel elektrisch leitend miteinander verbunden, um eine gemeinsame Sammelschiene zu bilden. Eine gesonderte Führung ist nicht erforderlich. Die gemeinsame Sammelschiene auf dieser Seite wird ebenfalls zu dem Anschluss geführt, die mit einer Stromversorgung verbunden werden kann.

Zusätzlich zu der mindestens einen Seite jedes Funktionselements, die mithilfe der PET-Sperrfolien versiegelt ist, bei der auf einer der Sperrfolien die mindestens eine äußere Sammelfolie aufgebracht ist, können mindestens eine weitere Seite jedes Funktionselements, insbesondere die gegenüberliegende Seite, an der sich die anderen inneren Sammelschienen bzw. die gemeinsame Sammelschiene befinden, oder bevorzugt alle Seiten jedes Funktionselements mithilfe von PET-Sperrfolien versiegelt sein, wobei sich für jede weitere Seite eine oder zwei PET-Sperrfolien zum Teil zwischen der einen Zwischenschicht und einem Randbereich der ersten Trägerfolie dieser Seite und/oder zwischen der anderen Zwischenschicht und einem Randbereich der zweiten Trägerfolie dieser Seite angeordnet sind.

Für die Versiegelung dieser anderen Seiten können entlang eines Randbereichs der Funktionselemente ein oder zwei PET-Sperrfolien vorhanden sein. Während eine PET-Sperrfolie für eine Versiegelung ausreichen kann, ist es in der Regel bevorzugt, wenn zwei PET-Sperrfolien entlang eines Randbereichs der Funktionselemente angebracht sind.

In einer Ausführungsform sind an jeder Seite der Funktionselemente jeweils eine oder zwei PET-Sperrfolien zur Versiegelung der Seite angebracht, wobei zwei PET-Sperrfolien bevorzugt sind.

Die Erfindung betrifft auch ein Verfahren zur Herstellung der vorstehend beschriebenen erfindungsgemäßen Verbundscheibe, wobei das Verfahren folgende Schritte umfasst:
a) Bereitstellen einer Anordnung, die in dieser Reihenfolge die Außenscheibe, eine Folie für eine Zwischenschicht, mindestens zwei Funktionselemente mit elektrisch steuerbaren optischen Eigenschaften, die gesondert voneinander in einer Ebene liegen, eine Folie für eine weitere Zwischenschicht und die Innenscheibe umfasst,
   wobei die Funktionselemente jeweils in dieser Reihenfolge eine erste Trägerfolie, eine erste Flächenelektrode, eine aktive Schicht, eine zweite Flächenelektrode und eine zweite Trägerfolie umfassen,
   an zwei gegenüberliegenden Seiten jedes Funktionselements jeweils eine innere Sammelschiene mit der ersten Flächenelektrode bzw. der zweiten Flächenelektrode des jeweiligen Funktionselements verbunden ist,
   wobei während des Anordnens an einer der beiden gegenüberliegenden Seiten jedes Funktionselements zwei PET-Sperrfolien zwischen der einen Zwischenschicht und einem Randbereich der ersten Trägerfolie bzw. zwischen der anderen Zwischenschicht und einem Randbereich der zweiten Trägerfolie angeordnet werden, so dass die PET-Sperrfolien über die Trägerfolien an dieser Seite herausragen, wobei auf dem herausragenden Teil einer PET-Sperrfolie mindestens eine äußere Sammelschiene, angebracht ist,
   wobei bei einer Teilanordnung, die die Trägerfolie mit mindestens einer äußeren Sammelschiene und die mindestens zwei Funktionselemente umfasst, eine innere Sammelschiene eines Funktionselements mittels einer Verbindung elektrisch leitend mit der äußeren Sammelschiene verbunden wird, und
b) Verbinden der Außenscheibe und der Innenscheibe durch Laminierung der Anordnung, wobei durch die Folien der Zwischenschichten die Verklebung des Scheibenverbunds erhalten wird und durch die PET-Sperrfolien die jeweilige Seite der Funktionselemente versiegelt wird.

Angaben zum erfindungsgemäßen Verfahren und den dafür eingesetzten Komponenten sind bereits teilweise vorstehend bei der Beschreibung der Verbundscheibe getätigt worden, worauf verwiesen wird.

In Verfahrensschritt a) wird eine Anordnung der Außenscheibe, einer Folie für eine Zwischenschicht, mindestens zwei Funktionselemente mit elektrisch steuerbaren optischen Eigenschaften, einer Folie für eine weitere Zwischenschicht und der Innenscheibe durch Übereinanderlegen in dieser Reihenfolge gebildet.

Die Funktionselemente können aus einem größeren Funktionselement in passender Größe ausgeschnitten werden, z.B. mit einem Messer oder mittels eines Lasers. Die Funktionselemente werden bevorzugt so positioniert, dass sie sich nicht bis zu einer der Seitenkanten der Anordnung bzw. des Schichtstapels erstrecken.

Die mindestens zwei Funktionselemente befinden sich gesondert voneinander in einer Ebene. Wie erläutert werden die mindestens zwei Funktionselemente bevorzugt in einer Reihe angeordnet, so dass die gegenüberliegenden Seiten der Funktionselemente, an denen sich die inneren Sammelschienen befinden, jeweils fluchtend in einer Linie positioniert sind.

Während des Anordnens an einer der beiden gegenüberliegenden Seiten jedes Funktionselements wird eine PET-Sperrfolie zwischen der einen Zwischenschicht und einem Randbereich der ersten Trägerfolie und eine andere PET-Sperrfolie zwischen der anderen Zwischenschicht und einem Randbereich der zweiten Trägerfolie angeordnet, so dass die PET-Sperrfolien über die Trägerfolien an dieser Seite herausragen.

Auf einer dieser PET-Sperrfolien befindet sich auf dem herausragenden Teil mindestens eine äußere Sammelschiene. Es versteht sich, dass die Sperrfolie passend positioniert werden muss. Die PET-Sperrfolie mit mindestens einer äußeren Sammelschiene kann zur besseren Fixierung gegebenenfalls zusätzlich durch Aufkleben fixiert werden.

Ein besonderer Vorteil der vorliegenden Erfindung besteht darin, dass die äußeren Sammelschienen auf der PET-Sperrfolie nicht während des Aufbaus der Anordnung für die Verbundscheibe aufgebracht werden muss, sondern das dies bereits vorher erfolgen kann. Die mindestens eine äußere Sammelschiene wird bevorzugt durch Anlöten oder Drucken auf die PET-Sperrfolie aufgebracht.

Die Positionierung bzw. Fixierung der PET-Sperrfolie in der Anordnung wurde vorstehend beschrieben. Dadurch ist bei beiden PET-Sperrfolien ein Teil der PET-Sperrfolie entlang eines Randbereichs zwischen einer Folie für die Zwischenschicht und einer Trägerfolie positioniert bzw. fixiert, während der andere Teil aus dem Funktionselement herausragt.

Wenn eine Teilanordnung gebildet worden ist, bei der die Trägerfolie mit mindestens einer äußeren Sammelschiene und die mindestens zwei Funktionselemente positioniert worden sind, wird mindestens eine innere Sammelschiene eines Funktionselements mittels einer Verbindung elektrisch leitend mit der äußeren Sammelschiene verbunden. Die Verbindung kann durch eine Lötverbindung erfolgen oder es kann als Verbindung eine Sammelschiene an die innere Sammelschiene und die äußere Sammelschiene angelötet werden. Im Gegensatz zum Stand der Technik bedarf es sehr viel weniger Lötvorgänge während des Aufbaus der Anordnung.

In Verfahrensschritt b) werden Außenscheibe und Innenscheibe durch Laminierung der Anordnung miteinander verbunden. In einer bevorzugten Ausführungsform wird während der Laminierung zumindest zeitweise ein Unterdruck an die Anordnung angelegt. Bei der Laminierung werden durch die mindestens zwei Folien für die Zwischenschichten Verbindungsschichten gebildet, die einen Verbund zwischen Außenscheibe und Innenscheibe bewirken.

Die Laminierung umfasst in der Regel eine Entlüftung oder Evakuierung unter Bildung eines Vorverbunds und die finale Laminierung des Vorverbunds unter Bildung der Verbundscheibe. Das zumindest zeitweise Anlegen eines Unterdrucks oder Vakuums an die Anordnung kann während der Entlüftung und/oder während der finale Laminierung erfolgen, vorzugsweise bei der Entlüftung bzw. Evakuierung.

Die Entlüftung kann nach den bekannten Verfahren erfolgen. Das finale Laminieren erfolgt bevorzugt unter Einwirkung von Wärme und Druck oder Vakuum, um die fertige Verbundscheibe zu erhalten. Die finale Laminierung kann z.B. bevorzugt bei Temperaturen von 80 bis 150°C, bevorzugt 105 bis 145°C, und einem Autoklavdruck von etwa 10 bis 14 bar erfolgen.

Bei der Laminierung der Anordnung wir durch die eingebauten PET-Sperrfolien entlang zumindest eines Bereichs der Seite bzw. Seitenkante des Funktionselements, bevorzugt entlang der ganzen Seite, eine Versiegelung gebildet. Der Teil der PET-Sperrfolien, die aus der Funktionselement herausragen, überdecken dabei insbesondere zumindest die aktive Schicht, wodurch die jeweilige Seite des Funktionselements versiegelt wird. Wie ausgeführt kann bei der Seite, an der die PET-Trägerfolie mit der mindestens einen äußeren Sammelschiene positioniert ist, die Versiegelung ggf. ganz oder im Wesentlichen durch die zweite PET-Trägerfolie auf dieser Seite ohne äußere Sammelschiene erfolgen.

Die aufliegende Positionierung der herausragenden Teile der PET-Sperrfolie auf der Seite bzw. Seitenkante des Funktionselements wird dabei insbesondere durch das zumindest zeitweise Anlegen eines Unterdrucks bzw. Evakuierens an die Anordnung gestützt. Das Einklemmen der PET-Sperrfolie zwischen Trägerfolie und PVB reicht zunächst zur Positionierung, durch die Evakuierung wird sie dann fixiert, angedrückt und entlüftet.

Die herausragenden Teile der PET-Sperrfolie können sich glatt oder in gefalteter Form an der Seitenkante in Richtung zur aktiven Schicht anlegen, um die Versiegelung zu bilden. Die Faltungen können unregelmäßig sein. Die aktive Schicht der Funktionsfolie wird dadurch effektiv von dem Material der Zwischenschicht geschützt, so dass keine Diffusion zwischen diesem Material und der aktiven Schicht stattfinden kann und eine Degradation der aktiven Schicht verhindert wird.

In einer bevorzugten Ausführungsform wird während der Bereitstellung der Anordnung zusätzlich zur Anordnung der PET-Sperrfolien an der einen Seite jedes Funktionselements, mindestens an einer weiteren Seite jedes Funktionselements oder bevorzugt an alle Seiten jedes Funktionselements jeweils eine oder zwei PET-Sperrfolien zwischen der einen Zwischenschicht und einem Randbereich der ersten Trägerfolie dieser Seite und/oder zwischen der anderen Zwischenschicht und einem Randbereich der zweiten Trägerfolie dieser Seite angeordnet, so dass die eine oder zwei PET-Sperrfolien an dieser Seite über die Trägerfolien herausragen, wodurch bei der anschließenden Laminierung die jeweilige Seite versiegelt wird.

Der erfindungsgemäß versiegelte Bereich der Seiten der Funktionselemente kann die gesamte umlaufende Seitenkante umfassen, insbesondere im Bereich der aktiven Schicht, gegebenenfalls mit Ausnahme etwaiger Stellen, an denen ein elektrischer Leiter zur elektrischen Kontaktierung der Flächenelektroden über die Seitenkante aus dem Funktionselement herausgeführt wird.

In einer bevorzugten Ausführungsform werden die inneren Sammelschienen auf der Seite der Funktionselemente, die der Seite gegenüberliegen, auf der die mindestens eine äußere Sammelschiene auf der PET-Sperrfolien angebracht ist, zu einer einzelnen Sammelschiene verbunden. Dies kann durch Löten erfolgen, wobei die inneren Sammelschienen mit einer elektrisch leitenden Verbindung miteinander verbunden werden.

In den Bereichen, die frei von den Funktionselementen sind, können gegebenenfalls als Ausgleich Folien als Zwischenteile eingebaut werden, die den Folien für die Zwischenschichten entsprechen. Alle diesbezüglichen Ausführungen gelten auch für die Folie für die Zwischenteile. Dementsprechend handelt es sich bei den Folien für die Zwischenteile bevorzugt um PVB-Folien. Die Folien für die Zwischenteile können in Form eines Rahmens ausgebildet sein. Die Funktionselemente können dann in den Aussparungen der rahmenartigen Folienteile positioniert werden.

Zur elektrischen Kontaktierung werden gewöhnlich elektrische Kabel mit den Sammelschienen der Funktionselemente verbunden und über die Seitenkante aus der Anordnung herausgeführt.

Vorzugsweise ist die erfindungsgemäße Verbundscheibe durch das beschriebene erfindungsgemäße Verfahren erhältlich.

Die Erfindung betrifft ferner die Verwendung der erfindungsgemäßen Verbundscheibe mit elektrisch steuerbaren optischen Eigenschaften als Fensterscheibe von Gebäuden, von Räumen im Inneren von Gebäuden oder von Fahrzeugen, insbesondere als Heckscheibe, Seitenscheibe, Windschutzscheibe oder Dachscheibe von Kraftfahrzeugen, wie z.B. Personenkraftfahrzeugen, oder Transportfahrzeugen, wie z.B. Bussen, Zügen und Schiffen.

Die Erfindung wird im Folgenden mithilfe von Ausführungsbeispielen und beigefügten Figuren näher erläutert, welche die Erfindung in keiner Weise einschränken sollen. Die beigefügten Figuren sind schematische Darstellungen und nicht maßstabsgetreu.

Es zeigen:
- Fig. 1: einen Ausschnitt einer Verbundscheibe mit elektrisch steuerbaren optischen Eigenschaften nach dem Stand der Technik im Querschnitt,
- Fig. 2: einen Ausschnitt einer erfindungsgemäßen Verbundscheibe mit elektrisch steuerbaren optischen Eigenschaften im Querschnitt,
- Fig. 3: einen Ausschnitt der erfindungsgemäßen Verbundscheibe gemäß Fig. 2 in der Draufsicht,
- Fig. 4: einen Ausschnitt der erfindungsgemäßen Verbundglasscheibe gemäß Fig. 2 im Querschnitt
- Fig.5: die erfindungsgemäße Verbundscheibe gemäß Fig. 2 im laminierten Zustand im Querschnitt.

Die Fig. 1 bis 4 zeigen schematisch die Anordnung der Verbundscheiben aus Gründen der Übersichtlichkeit vor der Laminierung und unter Weglassung der Glasscheiben.

Fig. 1 zeigt eine Verbundscheibe mit elektrisch steuerbaren optischen Eigenschaften nach dem Stand der Technik im Querschnitt. Das gezeigte Funktionselement 4 ist ein PDLC-Funktionselement. Das Funktionselement ist in dieser Reihenfolge aus einer ersten Trägerfolie 6a, einer ersten Flächenelektrode 7a, einer aktiven Schicht 5, einer Flächenelektrode 7b und einer zweiten Trägerfolie 6b gebildet.

Die erste und zweite Trägerfolie 6a, 6b sind PET-Folien und weisen z.B. eine Dicke von etwa 0,18 mm auf. Die Trägerfolien sind mit einer zur aktiven Schicht 5 weisenden elektrisch leitfähigen Beschichtung, z.B. aus ITO, versehen, welche die Flächenelektroden 7a, 7b bilden.

Das PDLC-Element 4 ist zwischen Folien für die Zwischenschichten 3a, 3b angeordnet. Die Zwischenschichten sind bevorzugt PVB-Folien, die z.B. eine Dicke von 0,38 mm aufweisen.

Die inneren Sammelschienen sind aus Gründen der Übersichtlichkeit ebenfalls weggelassen. Sie befinden sich auf den gegenüberliegenden Seiten, an denen die PET-Sperrfolien 8 angeordnet sind. Die PET-Sperrfolien 8 haben z.B. eine Dicke von 0,05 mm. Ein Teil der PET-Sperrfolien 8 ist jeweils zwischen einer der Zwischenschichten 3a, 3b und einer der Trägerfolien 6a, 6b angeordnet. Der andere Teil der PET-Sperrfolien ragt jeweils über das Funktionselement heraus.

In Fig. 1 ist das Prinzip der Anbringung der PET-Sperrfolien zur besseren Übersicht nur an zwei Seiten des Funktionselements gezeigt. In den bevorzugten Ausführungsformen sind an allen Seiten der Funktionselemente ein oder zwei PET-Sperrfolien angebracht.

Fig. 2 zeigt einen Ausschnitt einer erfindungsgemäßen Verbundscheibe mit elektrisch steuerbaren optischen Eigenschaften im Querschnitt. Die Verbundscheibe weist mit Ausnahme der PET-Sperrfolie 9 den gleichen Aufbau wie die Verbundscheibe in Fig. 1 aus, weswegen darauf verwiesen wird. Desweiteren ist nur das Ende an einer Seite der Verbundscheibe gezeigt. Die eine PET-Sperrfolie 8 weist keine äußeren Sammelschienen auf.

Auf der PET-Sperrfolie 9 sind äußere Sammelschienen 10a, 10b, 10c aufgebracht. Die äußeren Sammelschienen verlaufen zueinander parallel und sind beabstandet. Die äußeren Sammelschienen können durch Anlöten oder Drucken auf die PET-Sperrfolie 9 aufgebracht werden, bevor die PET-Sperrfolie in die Anordnung eingebaut wird.

Die Breite Bk der PET-Sperrfolie 8, auf der keine äußere Sammelschiene angebracht ist, kann z.B. im Bereich von 10 bis 25 mm liegen. Die Breite BI der PET-Sperrfolie 9, auf der mindestens eine äußere Sammelschiene angebracht ist, kann z.B. im Bereich von 30 bis 100 mm liegen.

Fig. 3 zeigt einen Ausschnitt der erfindungsgemäßen Verbundscheibe gemäß Fig. 2 in der Draufsicht. Hier wird ersichtlich, dass die Verbundscheibe vier (4) PDLC-Funktionselemente 12a, 12b, 12c, 12d aufweist, die in Reihe in einer Ebene angeordnet sind, wobei die gegenüberliegenden Seiten, an die innere Sammelschienen angebunden sind, fluchtend auf einer Linie positioniert sind. Die innere Sammelschiene 11a des PDLC-Elements 12a ist über die Verbindung 14a mit der äußeren Sammelschiene 10a, die auf der PET-Sperrfolie (nicht gezeigt) aufgebracht ist, verbunden. Die äußeren Sammelschiene 10a wird zum Anschluss für die Verbindung mit der Stromversorgung geführt. Entsprechend werden die inneren Sammelschienen 11b, 11c der PDLC-Elemente 12b, 12c über die Verbindungen 14b, 14c mit den äußeren Sammelschienen 10b, 10c verbunden und zum Anschluss geführt. Die innere Sammelschiene 11d des PDLC-Elements 12d kann ohne Verbindungen und äußere Sammelschienen direkt zum Konnektor bzw. Anschluss geführt werden (10d). Auf der gegenüberliegenden Seite der PDLC-Elemente sind die inneren Sammelschienen zu einer gemeinsamen Sammelschiene 13 verbunden, die ebenfalls zum Anschluss geführt wird.

Fig. 4 zeigt einen Ausschnitt der erfindungsgemäßen Verbundglasscheibe gemäß Fig. 2 im Querschnitt, in dem Einzelheiten zur den Sammelschienen gezeigt werden. Die innere Sammelschiene 13 ist mit der Flächenelektrode des PDLC-Elements verbunden, während die innere Sammelschiene 11a auf der gegenüberliegenden Seite mit der anderen Flächenelektrode des PDLC-Elements verbunden ist. Die innere Sammelschiene 11a ist über die Verbindung 14a mit der äußeren Sammelschiene 10a auf der PET-Trägerfolie verbunden.

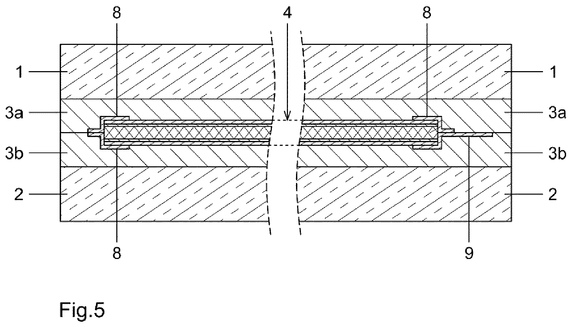

Fig. 5 zeigt die Verbundscheibe der Fig. 2, 3 und 4 im Querschnitt und im laminierten Zustand, d.h. als fertige Verbundscheibe. Zwischen der Außenscheibe 1 und der Innenscheibe 2 sind die PVB-Zwischenschichten 3a und 3b angeordnet, die die beiden Scheiben verbinden. In den Zwischenschichten ist das PDLC-Element 4 eingelagert. Die gegenüberliegenden Seiten des PDLC-Elements, an den die Sammelschienen angeordnet sind (nicht gezeigt), sind mittels der PET-Sperrfolien 8, 9 versiegelt. Auf diese Weise wird das PDLC-Element, insbesondere die aktive Schicht davon, vor dem Material der Zwischenschichten 3a, 3b geschützt.

Die Darstellung der Überdeckung der PDLC-Seite durch die PET-Sperrfolien zur Versiegelung ist rein schematisch. Die Art der Zusammenfaltung der herausragenden Teile der beiden PET-Sperrfolien ist in der Regel unregelmäßiger.

### Bezugszeichenliste

- 1: Außenscheibe
- 2: Innenscheibe
- 3a: erste Zwischenschicht
- 3b: zweite Zwischenschicht
- 4: Funktionselement mit elektrisch regelbaren optischen Eigenschaften, z.B. PDLC
- 5: aktive Schicht
- 6a: erste Trägerfolie
- 6b: zweite Trägerfolie
- 7a: erste Flächenelektrode
- 7b: zweite Flächenelektrode
- 8: PET-Sperrfolie
- 9: PET-Sperrfolie für äußere Sammelschiene
- 10a: äußere Sammelschiene für Funktionselement 1, z.B. PDLC 1
- 10b: äußere Sammelschiene für Funktionselement 2, z.B. PDLC 2
- 10c: äußere Sammelschiene für Funktionselement 3, z.B. PDLC 3
- 11a: innere Sammelschiene für Funktionselement 1, z.B. PDLC 1
- 11b: innere Sammelschiene für Funktionselement 2, z.B. PDLC 2
- 11c: innere Sammelschiene für Funktionselement 3, z.B. PDLC 3
- 11d: innere Sammelschiene für Funktionselement 4, z.B. PDLC 4
- 12a: Funktionselement 1, z.B. PDLC 1
- 12b: Funktionselement 2, z.B. PDLC 2
- 12c: Funktionselement 3, z.B. PDLC 3
- 12d: Funktionselement 4, z.B. PDLC 4
- 13: gemeinsame Sammelschiene für Funktionselemente 1-4
- 14a: Verbindung innere und äußere Sammelschiene für Funktionselement 1
- 14b: Verbindung innere und äußere Sammelschiene für Funktionselement 2
- 14c: Verbindung innere und äußere Sammelschiene für Funktionselement 3
- Bk: Breite Sperrfolie 8
- BI: Breite Sperrfolie 9

## Patentansprüche

1. Verbundscheibe, umfassend eine Außenscheibe (1), eine Innenscheibe (2) und mindestens zwei Zwischenschichten (3a, 3b) zwischen der Außenscheibe (1) und der Innenscheibe (2), wobei mindestens zwei gesonderte Funktionselemente (4, 12a, 12b, 12c, 12d) mit elektrisch steuerbaren optischen Eigenschaften in einer Ebene zwischen den beiden Zwischenschichten (3a, 3b) angeordnet sind,
die Funktionselemente jeweils in dieser Reihenfolge eine erste Trägerfolie (6a), eine erste Flächenelektrode (7a), eine aktive Schicht (5), eine zweite Flächenelektrode (7b) und eine zweite Trägerfolie (6b) umfassen,
an zwei gegenüberliegenden Seiten jedes Funktionselements jeweils eine innere Sammelschiene (11a, 11b, 11c, 11d, 13) mit der ersten Flächenelektrode (7a) bzw. der zweiten Flächenelektrode (7b) des jeweiligen Funktionselements verbunden ist, mindestens eine der beiden gegenüberliegenden Seiten jedes Funktionselements zumindest entlang eines Teilbereichs durch zwei Polyethylenterephthalat (PET)-Sperrfolien (8, 9) versiegelt ist, wobei die eine PET-Sperrfolie zum Teil zwischen der einen Zwischenschicht (3a) und einem Randbereich der ersten Trägerfolie (6a) angeordnet ist und die andere PET-Sperrfolie zum Teil zwischen der anderen Zwischenschicht (3b) und einem Randbereich der zweiten Trägerfolie (6b) angeordnet ist,
**dadurch gekennzeichnet, dass**
auf einer der PET-Sperrfolien (9) mindestens eine äußere Sammelschiene (10a, 10b, 10c) angebracht ist, die über eine elektrisch leitende Verbindung (14a, 14b, 14c) mit der inneren Sammelschiene (11a, 11b, 11c) eines Funktionselements verbunden ist, um das Funktionselement gesondert von dem oder den anderen Funktionselementen elektrisch anzusteuern.

2. Verbundscheibe nach Anspruch 1, wobei die Funktionselemente (4, 12a, 12b, 12c, 12d) jeweils unabhängig ausgewählt sind aus einem PDLC-Funktionselement, einem PNLC-Funktionselement oder einem SPD-Funktionselement, wobei die Funktionselemente bevorzugt PDLC-Funktionselemente sind.

3. Verbundscheibe nach Anspruch 1 oder Anspruch 2, wobei die mindestens zwei Zwischenschichten (3a, 3b) jeweils unabhängig gebildet sind aus einer Polyvinylbutyral (PVB)-Folie, einer Ethylenvinylacetat (EVA)-Folie oder einer thermoplastischen Polyurethan (TPU)-Folie, wobei die mindestens zwei Zwischenschichten (3a, 3b) bevorzugt aus Polyvinylbutyral (PVB)-Folien gebildet sind.

4. Verbundscheibe nach irgendeinem der vorhergehenden Ansprüche, wobei die inneren Sammelschienen auf der Seite der Funktionselemente, die der Seite gegenüberliegt, auf der die mindestens eine äußere Sammelschiene (10a, 10b, 10c) auf der PET-Sperrfolie (9) angebracht ist, eine gemeinsame Sammelschiene (13) bilden.

5. Verbundscheibe nach irgendeinem der vorhergehenden Ansprüche, wobei bei einer Anzahl der Funktionselemente (12a, 12b, 12c, 12d) von N die Anzahl der äußeren Sammelschienen (10a, 10b, 10c) auf der PET-Sperrfolie (9) (N-1) ist.

6. Verbundscheibe nach irgendeinem der vorhergehenden Ansprüche, wobei sich zwei oder mehr äußere Sammelschienen (10a, 10b, 10c) auf der PET-Sperrfolie (9) befinden, wobei jede äußere Sammelschiene (10a, 10b, 10c) über eine elektrisch leitende Verbindung (14a, 14b, 14c) mit der inneren Sammelschiene (11a, 11b, 11c) eines jeweils anderen Funktionselements verbunden ist.

7. Verbundscheibe nach irgendeinem der vorhergehenden Ansprüche, wobei zusätzlich zu der mindestens einen Seite jedes Funktionselements, die mithilfe der PET-Sperrfolien (8, 9) versiegelt ist, mindestens eine weitere Seite jedes Funktionselements oder bevorzugt alle Seiten jedes Funktionselements mithilfe von PET-Sperrfolien (8) versiegelt sind, wobei sich für jede weitere Seite eine oder zwei PET-Sperrfolien (8) zum Teil zwischen der einen Zwischenschicht (3a) und einem Randbereich der ersten Trägerfolie (6a) dieser Seite und/oder zwischen der anderen Zwischenschicht (3b) und einem Randbereich der zweiten Trägerfolie (6b) dieser Seite angeordnet sind.

8. Verfahren zur Herstellung einer Verbundscheibe nach irgendeinem der Ansprüche 1 bis 7, umfassend
a) Bereitstellen einer Anordnung, die in dieser Reihenfolge die Außenscheibe (1), eine Folie für eine Zwischenschicht (3a), mindestens zwei Funktionselemente (4, 12a, 12b, 12c, 12d) mit elektrisch steuerbaren optischen Eigenschaften, die gesondert voneinander in einer Ebene liegen, eine Folie für eine weitere Zwischenschicht (3b) und die Innenscheibe (2) umfasst,
wobei die Funktionselemente jeweils in dieser Reihenfolge eine erste Trägerfolie (6a), eine erste Flächenelektrode (7a), eine aktive Schicht (5), eine zweite Flächenelektrode (7b) und eine zweite Trägerfolie (6b) umfassen,
an zwei gegenüberliegenden Seiten jedes Funktionselements jeweils eine innere Sammelschiene (11a, 11b, 11c, 11d, 13) mit der ersten Flächenelektrode (7a) bzw. der zweiten Flächenelektrode (7b) des jeweiligen Funktionselements verbunden ist, wobei während des Anordnens an einer der beiden gegenüberliegenden Seiten jedes Funktionselements zwei PET-Sperrfolien (8, 9) zwischen der einen Zwischenschicht (3a) und einem Randbereich der ersten Trägerfolie (6a) bzw. zwischen der anderen Zwischenschicht (3b) und einem Randbereich der zweiten Trägerfolie (6b) angeordnet werden, so dass die PET-Sperrfolien (8, 9) über die Trägerfolien (6a, 6b) an dieser Seite herausragen, wobei auf dem herausragenden Teil einer PET-Sperrfolie (9) mindestens eine äußere Sammelschiene (10a, 10b, 10c) angebracht ist,
wobei bei einer Teilanordnung, die die Trägerfolie (9) mit mindestens einer äußeren Sammelschiene (10a, 10b, 10c) und die mindestens zwei Funktionselemente (4, 12a, 12b, 12c, 12d) umfasst, eine innere Sammelschiene (11a, 11b, 11c) eines Funktionselements mittels einer Verbindung (14a, 14b, 14c) elektrisch leitend mit der äußeren Sammelschiene (10a, 10b, 10c) verbunden wird, und
b) Verbinden der Außenscheibe (1) und der Innenscheibe (2) durch Laminierung der Anordnung, wobei durch die Folien der Zwischenschichten (3a, 3b) die Verklebung des Scheibenverbunds erhalten wird und durch die PET-Sperrfolien (8, 9) die jeweilige Seite der Funktionselemente versiegelt wird.

9. Verfahren nach Anspruch 8, wobei während der Laminierung zumindest zeitweise ein Unterdruck an die Anordnung angelegt wird.

10. Verfahren nach Anspruch 8 oder 9, wobei die mindestens eine äußere Sammelschiene (10a, 10b, 10c) durch Anlöten oder Drucken auf die PET-Sperrfolie (9) aufgebracht wird.

11. Verfahren nach irgendeinem der Ansprüche 8 bis 10, wobei
die Breite Bk der PET-Sperrfolie, auf der keine äußere Sammelschiene (10a, 10b, 10c) angebracht ist, im Bereich von 5 bis 50 mm, bevorzugt 10 bis 25 mm, liegt, und/oder
die Breite BI der PET-Sperrfolie, auf der mindestens eine äußere Sammelschiene (10a, 10b, 10c) angebracht ist, im Bereich von 20 bis 125 mm, bevorzugt 30 bis 100 mm, liegt.

12. Verfahren nach irgendeinem der Ansprüche 8 bis 11, wobei
die mindestens zwei Folien für die Zwischenschichten (3a, 3b) jeweils unabhängig eine Dicke im Bereich von 0,03 mm bis 0,9 mm aufweisen und/oder
die erste und zweite Trägerfolie (6a, 6b) jeweils unabhängig eine Dicke im Bereich von 0,03 mm bis 0,4 mm, bevorzugter von 0,04 mm bis 0,2 mm, aufweisen und/oder
die eine oder mehreren PET-Sperrfolien (8, 9) jeweils unabhängig eine Dicke im Bereich 0,02 mm bis 0,2 mm, bevorzugt 0,04 mm bis 0,15 mm, aufweisen.

13. Verfahren nach irgendeinem der Ansprüche 8 bis 12, wobei
während der Bereitstellung der Anordnung zusätzlich zur Anordnung der PET-Sperrfolien (8, 9) an der einen Seite jedes Funktionselements, mindestens an einer weiteren Seite jedes Funktionselements oder bevorzugt an alle Seiten jedes Funktionselements jeweils eine oder zwei PET-Sperrfolien (8) zwischen der einen Zwischenschicht (3a) und einem Randbereich der ersten Trägerfolie (6a) dieser Seite und/oder zwischen der anderen Zwischenschicht (3b) und einem Randbereich der zweiten Trägerfolie (6b) dieser Seite angeordnet werden, so dass die eine oder zwei PET-Sperrfolien (8) an dieser Seite über die Trägerfolien (6a, 6b) herausragen, wodurch bei der anschließenden Laminierung die jeweilige Seite versiegelt wird, und/oder
wobei die inneren Sammelschienen auf der Seite der Funktionselemente, die der Seite gegenüberliegen, auf der die mindestens eine äußere Sammelschiene (10a, 10b, 10c) auf der PET-Sperrfolien (9) angebracht ist, zu einer gemeinsamen Sammelschiene (13) verbunden werden.

14. Verwendung einer Verbundscheibe nach irgendeinem der Ansprüche 1 bis 7 als Fensterscheibe von Gebäuden, von Räumen im Inneren von Gebäuden oder von Fahrzeugen, insbesondere als Heckscheibe, Seitenscheibe, Windschutzscheibe oder Dachscheibe von Kraftfahrzeugen oder Transportfahrzeugen.

## Claims

1. Laminated pane, comprising an outer pane (1), an inner pane (2), and at least two intermediate layers (3a, 3b) between the outer pane (1) and the inner pane (2),
wherein at least two separate functional elements (4, 12a, 12b, 12c, 12d) with electrically controllable optical properties are arranged in a plane between the two intermediate layers (3a, 3b),
the functional elements comprise in each case, in this order, a first carrier film (6a), a first surface electrode (7a), an active layer (5), a second surface electrode (7b), and a second carrier film (6b),
on two opposite sides of each functional element, an inner bus bar (11a, 11b, 11c, 11d, 13) is connected in each case to the first surface electrode (7a) or to the second surface electrode (7b) of the respective functional element,
at least one of the two opposite sides of each functional element is sealed, at least along a partial region, by two polyethylene terephthalate (PET) barrier films (8, 9), wherein one PET barrier film is arranged partly between one intermediate layer (3a) and an edge region of the first carrier film (6a) and the other PET barrier film is arranged partly between the other intermediate layer (3b) and an edge region of the second carrier film (6b),
**characterized in that**
attached on one of the PET barrier films (9) is at least one outer bus bar (10a, 10b, 10c) that is connected via an electrically conducting connection (14a, 14b, 14c) to the inner bus bar (11a, 11b, 11c) of a functional element in order to electrically control the functional element separately from the other functional element or elements.

2. Laminated pane according to claim 1, wherein the functional elements (4, 12a, 12b, 12c, 12d) are each independently selected from a PDLC functional element, a PNLC functional element, or an SPD functional element, wherein the functional elements are preferably PDLC functional elements.

3. Laminated pane according to claim 1 or claim 2, wherein the at least two intermediate layers (3a, 3b) are in each case independently formed from a polyvinyl butyral (PVB) film, an ethylene vinyl acetate (EVA) film, or a thermoplastic polyurethane (TPU) film, wherein the at least two intermediate layers (3a, 3b) are preferably formed from polyvinyl butyral (PVB) films.

4. Laminated pane according to any one of the preceding claims, wherein the inner bus bars on the side of the functional element opposite the side on which the at least one outer bus bar (10a, 10b, 10c) is attached on the PET barrier film (9) form a common bus bar (13).

5. Laminated pane according to any one of the preceding claims, wherein when the number of the functional elements (12a, 12b, 12c, 12d) is N, the number of outer bus bars (10a, 10b, 10c) on the PET barrier film (9) is (N-1).

6. Laminated pane according to any one of the preceding claims, wherein two or more outer bus bars (10a, 10b, 10c) are situated on the PET barrier film (9), wherein each outer bus bar (10a, 10b, 10c) is connected via an electrically conducting connection (14a, 14b, 14c) to the inner bus bar (11a, 11b, 11c) of a respective other functional element.

7. Laminated pane according to any one of the preceding claims, wherein in addition to the at least one side of each functional element that is sealed using the PET barrier films (8, 9), at least one further side of each functional element or preferably all sides of each functional element are sealed using PET barrier films (8), wherein for each further side, one or two PET barrier films (8) are arranged partly between the one intermediate layer (3a) and an edge region of the first carrier film (6a) of this side and/or between the other intermediate layer (3b) and an edge region of the second carrier film (6b) of this side.

8. Method for producing a laminated pane according to any one of claims 1 through 7, comprising
a) Providing an assembly, comprising, in this order, the outer pane (1), a film for an intermediate layer (3a), at least two functional elements (4, 12a, 12b, 12c, 12d) with electrically controllable optical properties, which are positioned separately from one another in a plane, a film for a further intermediate layer (3b), and the inner pane (2), wherein the functional elements comprise, in each case, in this order, a first carrier film (6a), a first surface electrode (7a), an active layer (5), a second surface electrode (7b), and a second carrier film (6b),
on two opposite sides of each functional element, in each case, an inner bus bar (11a, 11b, 11c, 11d, 13) is connected to the first surface electrode (7a) or to the second surface electrode (7b) of the respective functional element,
wherein, during the arranging at one of the two opposite sides of each functional element, two PET barrier films (8, 9) are arranged between the one intermediate layer (3a) and an edge region of the first carrier film (6a) or between the other intermediate layer (3b) and an edge region of the second carrier film (6b) such that the PET barrier films (8, 9) protrude beyond the carrier films (6a, 6b) on this side, wherein at least one outer bus bar (10a, 10b, 10c) is attached on the protruding part of a PET barrier film (9),
wherein, in a subassembly, which comprises the carrier film (9) with at least one outer bus bar (10a, 10b, 10c) and the at least two functional elements (4, 12a, 12b, 12c, 12d), an inner bus bar (11a, 11b, 11c) of a functional element is electrically conductingly connected to the outer bus bar (10a, 10b, 10c) by means of a connection (14a, 14b, 14c), and
b) Connecting the outer pane (1) and the inner pane (2) by laminating the assembly, wherein the bonding of the pane composite is obtained by the films of the intermediate layers (3a, 3b) and the respective side of the functional elements is sealed by the PET barrier films (8, 9).

9. Method according to claim 8, wherein during the lamination, a negative pressure is applied to the assembly at least intermittently.

10. Method according to claim 8 or 9, wherein the at least one outer bus bar (10a, 10b, 10c) is applied on the PET barrier film (9) by soldering or printing.

11. Method according to any one of claims 8 through 10, wherein
the width Bk of the PET barrier film, on which no outer bus bar (10a, 10b, 10c) is attached, is in the range from 5 to 50 mm, preferably 10 to 25 mm, and/or
the width BI of the PET barrier film, on which at least one outer bus bar (10a, 10b, 10c) is attached, is in the range from 20 to 125 mm, preferably 30 to 100 mm.

12. Method according to any one of claims 8 through 11, wherein
the at least two films for the intermediate layers (3a, 3b) have, in each case, independently, a thickness in the range from 0.03 mm to 0.9 mm, and/or
the first and second carrier film (6a, 6b) have, in each case, independently, a thickness in the range from 0.03 mm to 0.4 mm, more preferably from 0.04 mm to 0.2 mm, and/or
the one or more PET barrier films (8, 9) have, in each case, independently, a thickness in the range from 0.02 mm to 0.2 mm, preferably 0.04 mm to 0.15 mm.

13. Method according to any one of claims 8 through 12, wherein
during the provision of the assembly, in addition to the arranging of the PET barrier films (8, 9) on one side of each functional element, at least on one further side of each functional element, or preferably an all sides of each functional element, in each case, one or two PET barrier films (8) are arranged between one intermediate layer (3a) and an edge region of the first carrier film (6a) of this side and/or between the other intermediate layer (3b) and an edge region of the second carrier film (6b) of this side such that the one or two PET barrier films (8) protrude on this side beyond the carrier films (6a, 6b), by which means the respective side is sealed during the subsequent lamination, and/or
wherein the inner bus bars on the side of the functional element, which are opposite the side on which the at least one outer bus bar (10a, 10b, 10c) is attached on the PET barrier films (9), are joined to form a common bus bar (13).

14. Use of a laminated pane according to any one of claims 1 through 7 as a window pane of buildings, of spaces in the interior of buildings or vehicles, in particular as a rear pane, side pane, windshield, or roof panel of motor vehicles or transport vehicles.

## Revendications

1. Vitrage feuilleté, comprenant une vitre externe (1), une vitre interne (2) et au moins deux couches intermédiaires (3a, 3b) entre la vitre externe (1) et la vitre interne (2), dans lequel au moins deux éléments fonctionnels (4, 12a, 12b, 12c, 12d) distincts comportant des propriétés optiques pouvant être commandées électriquement sont disposés dans un plan entre les deux couches intermédiaires (3a, 3b),
les éléments fonctionnels comprennent respectivement, dans cet ordre, un premier film de support (6a), une première électrode plate (7a), une couche active (5), une seconde électrode plate (7b) et un second film de support (6b),
sur deux côtés opposés de chaque élément fonctionnel, respectivement une barre omnibus interne (11a, 11b, 11c, 11d, 13) est reliée à la première électrode plate (7a) ou à la seconde électrode plate (7b) de l'élément fonctionnel respectif,
au moins l'un des deux côtés opposés de chaque élément fonctionnel est scellé au moins le long d'une région partielle par deux films barrières (8, 9) de polyéthylène téréphtalate (PET), dans lequel un film barrière de PET est disposé en partie entre une couche intermédiaire (3a) et une région de bord du premier film de support (6a), et l'autre film barrière de PET est disposé en partie entre l'autre couche intermédiaire (3b) et une région de bord du second film de support (6b),
**caractérisé en ce que**
sur l'un des films barrières (9) de PET, au moins une barre omnibus externe (10a, 10b, 10c) est montée, laquelle est reliée à la barre omnibus interne (11a, 11b, 11c) d'un élément fonctionnel par l'intermédiaire d'une liaison électriquement conductrice (14a, 14b, 14c), afin de commander électriquement l'élément fonctionnel séparément du ou des autres éléments fonctionnels.

2. Vitrage feuilleté selon la revendication 1, dans lequel les éléments fonctionnels (4, 12a, 12b, 12c, 12d) sont choisis respectivement indépendamment parmi un élément fonctionnel PDLC, un élément fonctionnel PNLC ou un élément fonctionnel SPD, dans lequel les éléments fonctionnels sont de préférence des éléments fonctionnels PDLC.

3. Vitrage feuilleté selon la revendication 1 ou la revendication 2, dans lequel les au moins deux couches intermédiaires (3a, 3b) sont formées respectivement indépendamment à partir d'un film de polyvinylbutyral (PVB), d'un film d'éthylène-acétate de vinyle (EVA) ou d'un film de polyuréthane thermoplastique (TPU), dans lequel les au moins deux couches intermédiaires (3a, 3b) sont formées de préférence à partir de films de polyvinylbutyral (PVB).

4. Vitrage feuilleté selon l'une quelconque des revendications précédentes, dans lequel les barres omnibus internes sur le côté des éléments fonctionnels opposé au côté sur lequel l'au moins une barre omnibus externe (10a, 10b, 10c) est montée sur le film barrière (9) de PET forment une barre omnibus commune (13).

5. Vitrage feuilleté selon l'une quelconque des revendications précédentes, dans lequel, pour un certain nombre N d'éléments fonctionnels (12a, 12b, 12c, 12d), le nombre de barres omnibus externes (10a, 10b, 10c) sur le film barrière (9) de PET est de (N-1).

6. Vitrage feuilleté selon l'une quelconque des revendications précédentes, dans lequel deux barres omnibus externes (10a, 10b, 10c) ou plus se trouvent sur le film barrière (9) de PET, dans lequel chaque barre omnibus externe (10a, 10b, 10c) est reliée à la barre omnibus interne (11a, 11b, 11c) d'un autre élément fonctionnel respectif par l'intermédiaire d'une liaison électriquement conductrice (14a, 14b, 14c).

7. Vitrage feuilleté selon l'une quelconque des revendications précédentes, dans lequel, en plus de l'au moins un côté de chaque élément fonctionnel scellé au moyen des films barrières (8, 9) de PET, au moins un autre côté de chaque élément fonctionnel ou de préférence tous les côtés de chaque élément fonctionnel sont scellés au moyen de films barrières (8) de PET, dans lequel, pour chaque côté supplémentaire, un ou deux films barrières (8) de PET sont disposés en partie entre une couche intermédiaire (3a) et une région de bord du premier film de support (6a) dudit côté et/ou entre l'autre couche intermédiaire (3b) et une région de bord du second film de support (6b) dudit côté.

8. Procédé de fabrication d'un vitrage feuilleté selon l'une quelconque des revendications 1 à 7, comprenant
a) la fourniture d'un agencement comprenant, dans cet ordre, la vitre externe (1), un film pour une couche intermédiaire (3a), au moins deux éléments fonctionnels (4, 12a, 12b, 12c, 12d) comportant des propriétés optiques pouvant être commandées électriquement, lesquels éléments fonctionnels sont séparés les uns des autres dans un plan, un film pour une couche intermédiaire (3b) supplémentaire et la vitre interne (2),
dans lequel les éléments fonctionnels comprennent respectivement, dans cet ordre, un premier film de support (6a), une première électrode plate (7a), une couche active (5), une seconde électrode plate (7b) et un second film de support (6b),
sur deux côtés opposés de chaque élément fonctionnel, respectivement une barre omnibus interne (11a, 11b, 11c, 11d, 13) est reliée à la première électrode plate (7a) ou à la seconde électrode plate (7b) de l'élément fonctionnel respectif,
dans lequel, pendant l'agencement au niveau de l'un des deux côtés opposés de chaque élément fonctionnel, deux films barrières (8, 9) de PET sont disposés entre une couche intermédiaire (3a) et une région de bord du premier film de support (6a) ou entre l'autre couche intermédiaire (3b) et une région de bord du second film de support (6b), de sorte que les films barrières (8, 9) de PET font saillie depuis les films de support (6a, 6b) sur ledit côté, dans lequel au moins une barre omnibus externe (10a, 10b, 10c) est montée sur la partie en saillie d'un film barrière (9) de PET,
dans lequel, dans un agencement partiel qui comprend le film de support (9) comportant au moins une barre omnibus externe (10a, 10b, 10c) et les au moins deux éléments fonctionnels (4, 12a, 12b, 12c, 12d), une barre omnibus interne (11a, 11b, 11c) d'un élément fonctionnel est reliée d'une manière électriquement conductrice à la barre omnibus externe (10a, 10b, 10c) au moyen d'une liaison (14a, 14b, 14c), et
b) la liaison de la vitre externe (1) et de la vitre interne (2) par stratification de l'agencement, dans lequel le collage du composite de vitres résulte des films des couches intermédiaires (3a, 3b), et le côté respectif des éléments fonctionnels est scellé par les films barrières (8, 9) de PET.

9. Procédé selon la revendication 8, dans lequel, pendant la stratification, une pression négative est appliquée à l'agencement au moins temporairement.

10. Procédé selon la revendication 8 ou 9, dans lequel l'au moins une barre omnibus externe (10a, 10b, 10c) est déposée sur le film barrière (9) de PET par brasage ou impression.

11. Procédé selon l'une quelconque des revendications 8 à 10, dans lequel
la largeur Bk du film barrière de PET, sur laquelle aucune barre omnibus externe (10a, 10b, 10c) n'est montée, se situe dans la plage de 5 à 50 mm, de préférence de 10 à 25 mm, et/ou
la largeur BI du film barrière de PET, sur laquelle au moins une barre omnibus externe (10a, 10b, 10c) est montée, se situe dans la plage de 20 à 125 mm, de préférence de 30 à 100 mm.

12. Procédé selon l'une quelconque des revendications 8 à 11, dans lequel
les au moins deux films pour les couches intermédiaires (3a, 3b) présentent respectivement indépendamment une épaisseur dans la plage de 0,03 mm à 0,9 mm et/ou
les premier et second films de support (6a, 6b) présentent respectivement indépendamment une épaisseur dans la plage de 0,03 mm à 0,4 mm, de manière davantage préférée de 0,04 mm à 0,2 mm et/ou
le ou les films barrières (8, 9) de PET présentent respectivement indépendamment une épaisseur dans la plage de 0,02 mm à 0,2 mm, de préférence de 0,04 mm à 0,15 mm.

13. Procédé selon l'une quelconque des revendications 8 à 12, dans lequel
pendant la fourniture de l'agencement en plus de l'agencement des films barrières (8, 9) de PET sur un côté de chaque élément fonctionnel, au moins sur un autre côté de chaque élément fonctionnel ou de préférence sur tous les côtés de chaque élément fonctionnel, respectivement un ou deux films barrières (8) de PET sont disposés entre une couche intermédiaire (3a) et une région de bord du premier film de support (6a) dudit côté et/ou entre l'autre couche intermédiaire (3b) et une région de bord du second film de support (6b) dudit côté, de sorte que lesdits un ou deux films barrières (8) de PET font saillie depuis les films de support (6a, 6b) sur ledit côté, moyennant quoi le côté respectif est scellé lors de la stratification qui s'ensuit, et/ou
dans lequel les barres omnibus internes sur le côté des éléments fonctionnels opposés au côté sur lequel l'au moins une barre omnibus externe (10a, 10b, 10c) est montée sur les films barrières (9) de PET sont reliées pour former une barre omnibus commune (13).

14. Utilisation d'un vitrage feuilleté selon l'une quelconque des
revendications 1 à 7 comme vitre de fenêtre de bâtiments, d'espaces à l'intérieur de bâtiments ou de véhicules, en particulier comme lunette arrière, vitre latérale, pare-brise ou vitre de toit de véhicules automobiles ou de véhicules de transport.
